# EUROPÄISCHE PATENTSCHRIFT

(11) **EP 2 067 206 B1**
(45) Veröffentlichungstag und Bekanntmachung des Hinweises auf die Patenterteilung: **07.11.2012**
(21) Anmeldenummer: 07818219.3
(22) Anmeldetag: 18.09.2007
(51) Int. Cl.: H01M 10/50, G05D 23/00, H01M 2/10

(54) **MODULARE BATTERIEEINHEIT**
MODULAR BATTERY UNIT
UNITE MODULAIRE DE BATTERIE

(30) Priorität: 18.09.2006 AT 6792006 U; 14.09.2007 DE 102007043947
(43) Veröffentlichungstag der Anmeldung: 10.06.2009
(73) Patentinhaber: Magna E-Car Systems GmbH & Co OG, 8041 Graz (AT)
(72) Erfinder: MAIER, Günter, A-8042 Graz (AT); MICHELITSCH, Martin, A-8160 Weiz (AT)
(74) Vertreter: Rausch, Gabriele
(86) Internationale Anmeldenummer: PCT/EP2007/008117
(87) Internationale Veröffentlichungsnummer: WO 2008/034584

(56) Entgegenhaltungen:
- EP-A- 1 033 771
- EP-A- 1 508 182
- JP-A- 2000 004 508
- US-A- 4 578 324
- US-A1- 2005 170 241

## Beschreibung

Die Erfindung betrifft eine modulare Batterieeinheit mit zumindest zwei Batteriezellen sowie einem zwischen den Batteriezellen angeordneten und sich in Richtung der größten Ausdehnung der Batteriezellen an die Batteriezellen anschmiegenden Kühlkörper. Der Kühlkörper wird von einem Kühlmedium durchströmt und transportiert einerseits in den Batteriezellen entstandene Wärme ab und stützt andererseits die Batteriezellen ab. An dem Kühlkörper sind zwei Deckkappen angeordnet, wobei eine erste der zwei Deckkappen zum Verschließen der ersten Stirnfläche des Kühlkörpers und eine zweite der zwei Deckkappen zum Verschließen der zweiten Stirnfläche des Kühlkörpers und ein Zulauf (16) und ein Ablauf (17) für das Kühlmedium vorgesehen sind, wobei der Zulauf des Kühlmediums an der ersten und/oder zweiten Deckkappe und der Ablauf des Kühlmediums an der ersten und/oder zweiten Deckkappe angeordnet ist.

Eine Ausgestaltung einer solchen Batterieeinheit ist aus EP 0917230 B1 bekannt, wobei Rundzellen durch eine geeignete Temperiereinrichtung eingeschlossen werden.

Aus EP 1508182 B1 ist eine alternative Ausgestaltung einer Batterie mit mehreren Speicherzellen bekannt.

Aus JP 2000 004508 A ist ein Batteriegehäuse für ein Elektrofahrzeug bekannt. Durch Kanäle im Gehäuse erfolgt eine Luftkühlung der Batteriezellen.

Aus der US20050170241A1 ist ein elektrochemischer Energiespeicher mit einer Mehrzahl von Zellen sowie einer geeigneten Temperiereinheit bekannt.

Es ist Aufgabe der Erfindung eine modulare Batterieeinheit nach dem Oberbegriff des Anspruch 1 zu entwickeln, die sich durch eine einfache Bauweise und optimale Anpassung an einen vorhandenen Bauraum, insbesondere eines Kraftfahrzeuges, sowie eine möglichst effiziente Kühlung auszeichnet.

Die Batterieeinheit ist so auszubilden, dass sie möglichst einfach und kostengünstig mit variabler Anordnung der Zellen herstellbar ist und für alle Zellen eine möglichst gleichmä-βige Temperaturverteilung sicherstellt. Erfindungsgemäß wird das durch eine Batterieeinheit nach Anspruch 1 gelöst.

Die modulare Batterieeinheit ist dabei erfindungsgemäß derart ausgestaltet, dass der Kühlkörper ein Profil mit auf gegenüberliegenden Seiten angeordneten offenen kreisbogenförmigen Ausnehmungen zur Aufnahme der Batteriezellen und der Kühlkörper zwischen der ersten und der zweiten Deckkappe verlaufende getrennte Kanäle zur Kühlung der Batteriezellen aufweist. Der Kühlkörper ist als ein tragendes Strangpressteil ausgeführt und die Kanäle in seinem Inneren werden durch entsprechende Wände des Strangpressprofiles gebildet.

Nach einer bevorzugten Ausführungsform der erfindungsgemäßen Vorrichtung ist die Deckkappe als Deckplatte ausgeführt. Darüber hinaus sind weitere beliebige Formen der-Deckkappen verwendbar, solange dadurch die Kühlkanäle des Kühlkörpers geeignet verschlossen werden können.

Nach einer bevorzugten Ausführungsform der erfindungsgemäßen Vorrichtung ist die Längsrichtung des Kühlkörpers als Richtung seiner größten Ausdehnung definiert. Nach einer besonderen Ausführung der erfindungsgemäßen Vorrichtung sind die Kanäle des Kühlkörpers ebenfalls in Längsrichtung ausgerichtet.

Nach einer weiteren Ausführungsform der erfindungsgemäßen Vorrichtung ist der Zulauf des Kühlmediums an der ersten Deckkappe und der Ablauf des Kühlmediums an der zweiten Deckkappe angeordnet.

Nach einer weiteren Ausführungsform der erfindungsgemäßen Vorrichtung ist sowohl der Ablauf als auch der Zulauf des Kühlmediums an der ersten Deckkappe angeordnet.

Nach einer weiteren Ausführungsform der erfindungsgemäßen Vorrichtung weist der Kühlkörper in Längsrichtung des Kühlkörpers zwischen der ersten und der zweiten Deckkappe verlaufende getrennte Kanäle auf, wobei das Kühlmedium benachbarte Kanäle in entgegengesetzten Richtungen durchströmt.

Nach einer weiteren Ausführungsform der erfindungsgemäßen Vorrichtung weist der Kühlkörper in Längsrichtung des Kühlkörpers zwischen der ersten und der zweiten Deckkappe verlaufende getrennte Kanäle auf, wobei das Kühlmedium benachbarte Kanäle in gleicher Richtung strömt.

Nach einer weiteren Ausführungsform der erfindungsgemäßen Vorrichtung weist der Kühlkörper in Längsrichtung des Kühlkörpers zwischen der ersten und der zweiten Deckkappe verlaufende getrennte Kanäle auf, wobei das Kühlmedium in einem ersten Bereich des Kühlkörpers in benachbarten Kanälen in einer ersten Richtung strömt und in einem zweiten Bereich in benachbarten Kanälen in einer zweiten, der ersten Richtung entgegengesetzten, Richtung strömt.

Nach einer weiteren Ausführungsform der erfindungsgemäßen Vorrichtung sind in Längsrichtung des Kühlkörpers mehrere Batteriezellen hintereinander angeordnet.

Nach einer weiteren Ausführungsform der erfindungsgemäßen Vorrichtung ist zumindest eine der Deckkappen, insbesondere beide Deckkappen, als Druckgußteile ausgebildet und an dem Kühlkörper geeignet befestigt, insbesondere mit dem Kühlkörper, verschweisst.

Nach einer weiteren Ausführungsform der erfindungsgemäßen Vorrichtung ist der Kühlkörper ein Strangpressteil, wobei die Kanäle in seinem Inneren durch entsprechende Wände des Strangpressprofiles gebildet werden.

Nach einer weiteren Ausführungsform der erfindungsgemäßen Vorrichtung ist die Verbindung zwischen zwei benachbarten Kanälen durch abwechselnd von den beiden Stirnflächen des Kühlkörpers ausgehende Ausklinkungen der Wände hergestellt.

Nach einer weiteren Ausführungsform der erfindungsgemäßen Vorrichtung sind zur Verbindung zwischen zwei benachbarten Kanälen des Kühlkörpers die, insbesondere rohrförmigen, Wände des Strangpressprofiles in Längsrichtung des Kühlkörpers zurückgenommen.

Nach einer weiteren Ausführungsform der erfindungsgemäßen Vorrichtung hat der Kühlkörper für die Aufnahme der Batteriezellen Rücken an Rücken und Seite an Seite kreisbogenförmige Ausnehmungen, wobei zwischen je vier Ausnehmungen ein erster ein Rohr bildender Profilteil vorgesehen ist, von dem Zwischenwände sternförmig ausgehen.

Nach einer besonderen Ausführungsform der erfindungsgemäßen Vorrichtung ist zumindest eine der Batteriezellen an dem Kühlkörper angepresst und/oder angeklebt. Hierdurch kann ein guter Wärmeübergang zwischen der Batteriezelle und dem Kühlkörper gewährleistet werden.

Nach einer weiteren Ausführungsform der erfindungsgemäßen Vorrichtung haben die Deckkappen mit dem ein Rohr bildenden Profilteil deckungsgleich je ein Loch, sodass die beiden Deckkappen mittels erster Zugelemente miteinander verbunden werden können.

Nach einer weiteren Ausführungsform der erfindungsgemäßen Vorrichtung hat das den Kühlkörper bildende Strangpressprofil für die Aufnahme der Zellen Rücken an Rücken und Seite an Seite kreisbogenförmige Ausnehmungen, wobei zwischen den obersten und untersten zwei Rücken an Rücken angeordnete Ausnehmungen und einem Querteil des Profils ein zweiter ein Rohr bildender Profilteil vorgesehen ist, welcher drei Zwischenwände bildet.

Nach einer weiteren Ausführungsform der erfindungsgemäßen Vorrichtung sind die zweiten ein Rohr bildenden Profilteile einerseits mit dem Zulauf beziehungsweise Ablauf des Kühlmittels strömungsverbunden.

Nach einer weiteren Ausführungsform der erfindungsgemäßen Vorrichtung ist eine Umfassung der Batteriezellen sowie des Kühlkörpers vorgesehen. Die Umfassung ist von äußeren Zugelementen gebildet, die die Batteriezellen an ihrer dem Kühlkörper abgewandten Aussenseite umschlingen. Nach einer besonderen Ausführungsform ist der Raum zwischen den äußeren Zugelementen und den nicht an dem Kühlkörper anliegenden Teilen der Zellen von einem dreikantigen Längsprofil ausgefüllt.

Nach einer weiteren Ausführungsform der erfindungsgemäßen Vorrichtung ist das dreikantige Längsprofil hohl.

Die Erfindung ist nach einer weiteren Ausführungsform durch ein Batteriesystem mit mehreren modularen Batterieeinheit nach einem der Ansprüche 1 bis 16 gekennzeichnet, wobei die modularen Batterieeinheiten in einem Gehäuse geeignet benachbart angeordnet sind und die Zu- und Abläufe jeweils miteinander verbunden sind.

Nach einer weiteren Ausführungsform des erfindungsgemäßen Batteriesystems weist jeder Kühlkörper eine vertikale, entlang der Längsrichtung des Kühlkörpers ausgerichtete, Mittelebene auf, wobei die Batterieeinheiten seitlich hintereinander in Richtung normal auf die vertikalen Mittelebenen der Kühlkörper angeordnet sind.

Nach einer weiteren Ausführungsform ist die Erfindung durch ein Verfahren zur Anpassung eines Batteriesystems an einen Bauraum, insbesondere eines Fahrzeuges, gekennzeichnet, wobei das Batteriesystem aus zumindest einer modularen Batterieeinheit nach einem der Ansprüche 1 bis 16 gebildet wird und der Kühlkörper der modularen Batterieeinheit eine vorgegebene Breite und Höhe sowie eine variable Länge aufweist, wobei die Länge des Kühlkörpers entsprechend einer in dem Bauraum verfügbaren Bauraumlänge gewählt wird.

Nach einer weiteren Ausführungsform des erfindungsgemäßen Verfahrens wird der Kühlkörper der modularen Batterieeinheit aus einem Strangpressprofil auf die gewählte Länge zugeschnitten.

Nach einer Ausführungsform der Erfindung wird der Kühlkörper der Batterieeinheit durch Strangpressen hergestellt.

Nach einer besonderen Ausführungsform der Erfindung ist der Kühlkörper bzw. die Trägerplatte als Strangpressteil aus Leichtmetall ausgeführt, wobei das Profil des Strangpressteils in seinem Inneren durch Zwischenwände getrennte, in die Längsrichtung des Strangpressteiles verlaufende Kanäle aufweist, wobei die Flüssigkeit in benachbarten Kanälen in entgegengesetzten Richtungen strömt, und wobei das die Trägerplatte bildende Strangpressprofil an seinen beiden Stirnflächen jeweils von einer Deckplatte verschlossen ist.

Nach einer besonderen Ausführungsform der Erfindung wird die an sich bekannte Herstellung von Profilen durch Strangpressen dazu genutzt, eine Mehrzahl von parallelen Kühlkanälen mit weitgehend konstanter Wandstärke bezüglich der Oberfläche der Ausnehmungen und benachbarter Kühlkanäle mit, insbesondere entgegengesetzter, Durchflussrichtung auszubilden. Damit wird in jeder Richtung eine gleichmäßigere Temperaturverteilung erreicht. Die, die naturgemäß beiderseits des Strangpressprofils offenen Kühlkanäle, abschließenden Endplatten bzw. Deckkappen bilden Anschlüsse für die Kühlflüssigkeit, sodass das Strangpressprofil selbst mit einem Minimum an Bearbeitung verwendet wird.

Nebstbei bieten Strangpressprofile, weil sie in beliebiger Länge abgeschnitten werden können, bei dieser Anwendung den Vorteil, dass in einer Ausnehmung eine verschiedene Anzahl von Zellen hintereinander angeordnet werden kann. Dadurch können die Einbaumaße einer Batterie dem jeweils zur Verfügung stehenden Einbauraum angepasst werden. Das erlaubt es auch, das die Trägerplatte bildende Strangpressprofil an seinen beiden Stirnflächen mit einer dem Profil entsprechenden, einheitlichen Deckplatte zu verschließen.

Nach einer besonderen Ausführungsform der Erfindung wird die Verbindung zwischen den Kanälen durch Einfräsungen in der Deckplatte geschaffen. In einer bevorzugten Ausbildung jedoch werden sie durch von der jeweiligen Stirnfläche ausgehende Ausklinkungen der Zwischenwände hergestellt, sodass die Deckplatten dafür nicht eigens bearbeitet werden müssen und baugleich sein können. Anstelle der Ausklinkungen können die rohrförmigen Wandteile mit dem Zufluss beziehungsweise Abfluss in Längsrichtung zurückgenommen sein.

Das die Trägerplatte bildende Strangpressprofil bildet nach einer besonderen Ausführungsform der Erfindung mit seiner äusseren Kontur die kreisbogenförmigen Ausnehmungen für die Aufnahme der Zellen in zumindest zwei parallelen Reihen, sodass die Ausnehmungen für die Zellen paarweise Rücken an Rücken und Paare von Ausnehmungen Seite an Seite sind. In einer bevorzugten Ausbildung ist zwischen je vier Ausnehmungen ein erster ein Rohr bildender Profilteil vorgesehen, von dem die Zwischenwände sternförmig ausgehen. Durch diese Profilteile an den Stellen größter Breite der Trägerplatten wird so eine nicht durchströmte Zone und um diese herum werden so Kanäle ungefähr gleichen Querschnittes für die Kühlströmung geschaffen. Dadurch bleibt die für den Wärmeübergang maßgebende Strömungsgeschwindigkeit weitgehend unverändert. In Weiterbildung haben die Deckplatten je ein mit dem jeweiligen ein Rohr bildenden Profilteil deckungsgleiches Loch, durch das die beiden Deckplatten auch in ihrer mittleren Region mittels erster Zugelemente zusammen gehalten sind. Die Zugelemente sind vorzugsweise Schraubbolzen, die die Deckplatten dichtend an die Trägerplatte anpressen.

In ähnlicher Weise können nach einer weiteren bevorzugten Ausführungsform zwischen den obersten und untersten zwei Rücken an Rücken angeordnete Ausnehmungen einer Reihe und einem Querteil des Profils jeweils ein zweiter ein Rohr bildender Profilteil vorgesehen sein, welcher selbst drei Zwischenwände bildet. Diese Profilteile sind einerseits an den Flüssigkeits-Kühlkreislauf angeschlossen. Ihr anderes Ende ist flüssigkeitsdicht verschlossen. Dazu weisen die Deckplatten an der Seite des Anschlusses an den Kühlkreislauf Öffnungen auf, durch die die Kühlflüssigkeit zu- beziehungsweise abgeführt wird.

In Weiterbildung der Batterieeinheit nach einer weiteren bevorzugten Ausführungsform ist die äußere Umfassung der Batterieeinheit von äußeren Zugelementen gebildet, die die Zellen an ihrer der Trägerplatte abgewandten Seite umschlingen, wobei gegebenenfalls der Raum zwischen den zweiten Zugelementen und den nicht an der Trägerplatte anliegenden Teile der Zellen von einem dreikantigen Längsprofil ausgefüllt ist. So ist sichergestellt dass alle Zellen an den Ausnehmungen der Trägerplatte anliegen. Nach einer weiteren bevorzugten Ausfühmngsform sind diese hohle dreikantige Hohlprofile. Wenn diese ebenfalls von der Kühlflüssigkeit durchströmt sind, wird die Temperaturverteilung auch am Umfang der Zellen verbessert.

Im Folgenden wird die Erfindung anhand von beispielhaften und nicht-einschränkenden Abbildungen beschrieben und erläutert. Es stellen dar:
Fig. 1: eine erfindungsgemäße Batterie in axonometrischer Ansicht
Fig. 2: wie Fig. 1, aber ohne Deckel
Fig. 3: eine Stirnansicht gemäß A in Fig. 2
Fig. 4: eine Stirnansicht gemäß B in Fig. 2
Fig. 5: einen Längsschnitt gemäß V-V in Fig 3 und Fig.4.
Fig. 6: eine weitere mögliche Ausführungsform einer erfindungsgemäßen Batterieeinheit
Fig. 7: der Kühlkörper aus Fig. 6 in einem Längsschnitt
Fig. 8: ein Batteriesystem zusammengesetzt aus mehreren Batterieeinheiten nach
Fig. 6

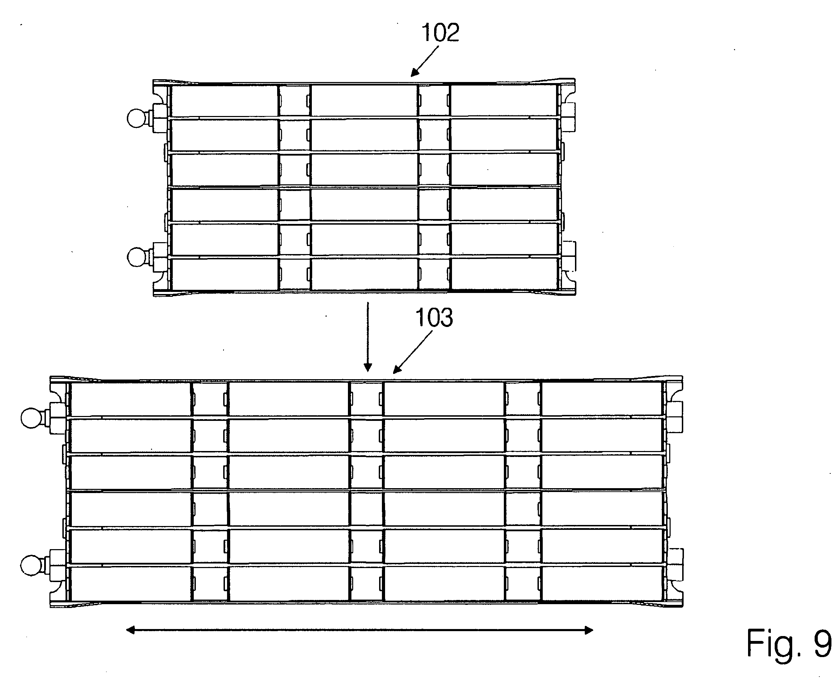

Fig. 9: verschiedene mögliche Ausführungsformen von Batterieeinheiten

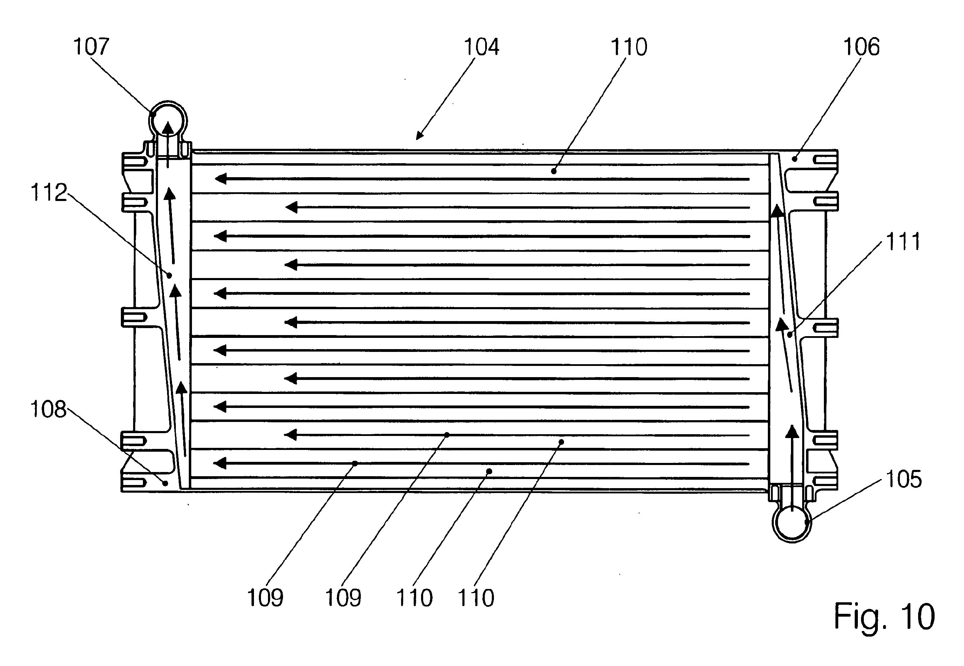

Fig. 10: eine alternative Ausführung eines Kühlkörpers

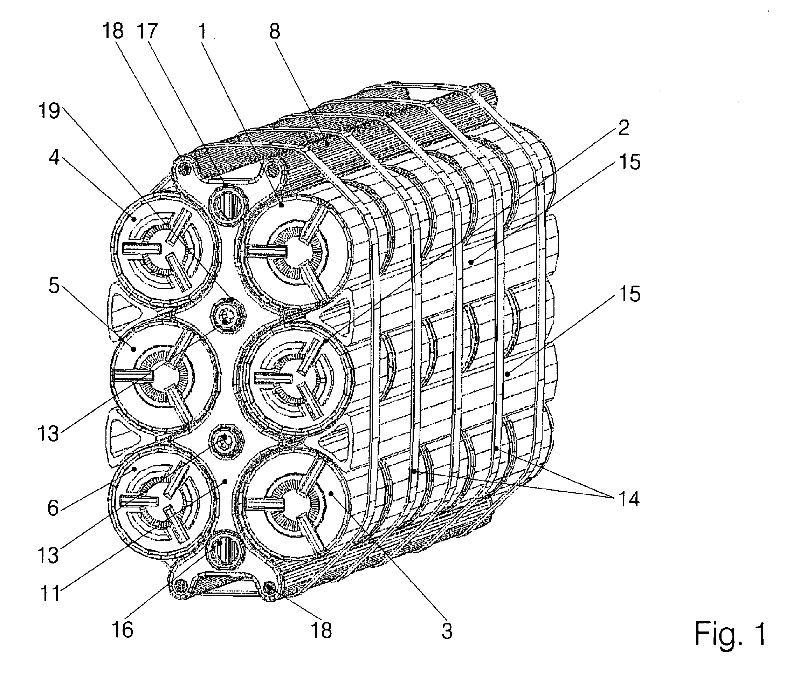

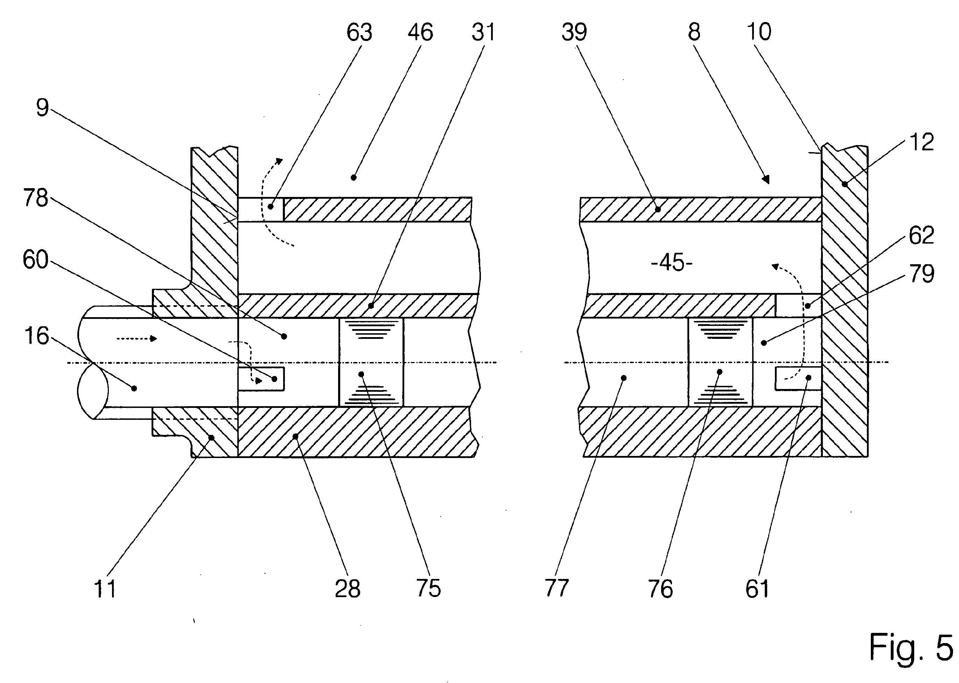

In Fig. 1 sind die in zwei parallelen Reihen angeordneten Zellen mit den Bezugszeichen 1 bis 6 versehen, die Zellen 1 bis 3 bilden eine erste Reihe und die Zellen 4 bis 6 eine zweite. Die Zellen können Hochleistungszellen beliebiger Bauart und chemischer Funktionsweise sein. Sie sind zylindrisch und reichen entweder über die ganze Länge der Batterie oder sind wie im gezeigten Ausführungsbeispiel aus fünf hintereinander angeordneten Einzelzellen zusammengesetzt. Auf die elektrischen Verbindungen und Anschlüsse braucht nicht eingegangen zu werden, weil sie für die Erfindung unwesentlich sind. Zwischen zwei Reihen von Zellen erstreckt sich über die ganze Länge eine vom Kühlmittel in noch zu beschreibender Weise durchströmte Kühlkörper 8 bzw. Trägerplatte. Dieser ist ein Strangpressprofil vorzugsweise aus Leichtmetall, oder aus einem anderen geeigneten Werkstoff. Die Herstellung des Kühlkörpers durch Strangpressen erlaubt die Herstellung eines beiderseits offenen Hohlkörpers mit komplexem Querschnitt mit geringem Herstellungsaufwand. Ein so hergestelltes und in Stücke mit der Länge der Batterieinheit zerschnittenes Profil ist an seinen beiden so gebildeten Stirnflächen 9, 10 mit einem Deckel bzw. einer Deckkappe 11 beziehungsweise 12 (siehe Fig.5) verschlossen. Die Deckkappen 11, 12 können auch so ausgebildet sein, dass sie die Zellen 1 bis 6, insbesondere in ihrer Längsrichtung, halten und/oder fixieren.

Die beiden Deckkappen 11, 12 werden von ersten Zugelementen 13 (zum Beispiel langen Gewindebolzen) zusammengehalten. Dazu sind die Deckel 11, 12 mit Bohrungen 18 am Rand, und Bohrungen 19 in der mittleren Region der Trägerplatte 8 versehen. Alle Zellen 1 bis 6 der Batterie werden von zweiten bzw. äußeren Zugelementen 14, hier Spannbändern, an den Kühlkörper 8 angedrückt und zusammengehalten. Zwischen den zweiten bzw. äußeren Zugelementen 14 und der der Trägerplatte 8 abgewandten Kontur der Zellen bis 6 ist jeweils ein annähernd dreikantiges hohles Längsprofil 15 angebracht. Näherungsweise, weil zwei Seiten konkave Zylinderflächen bilden, die sich an je zwei Zellen anlegen. In der vorderen Deckkappe 11 sind weiters Bohrungen 16, 17 für den Anschluss an den Kühlkreislauf vorgesehen, die untere (16) für den Zufluss und die obere (17) für den Abfluss.

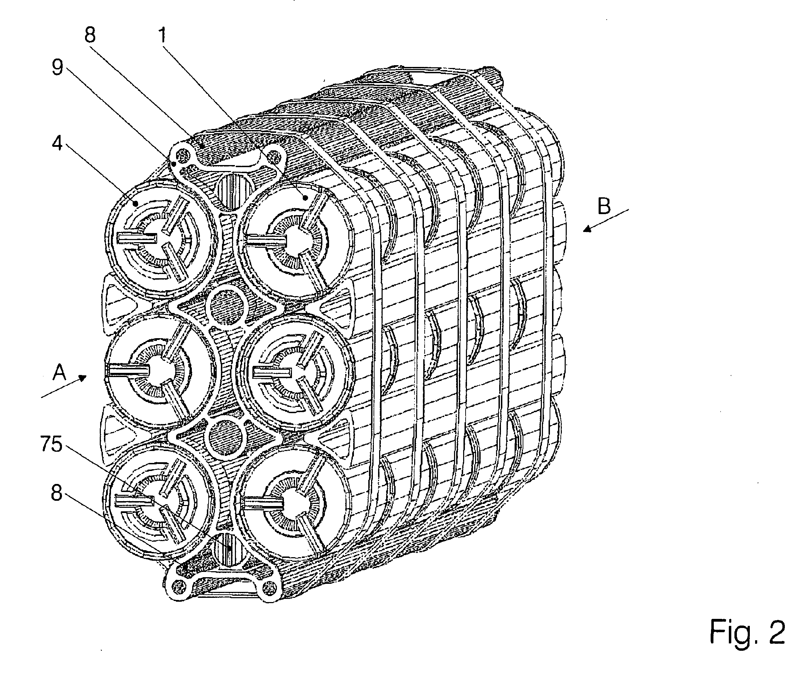

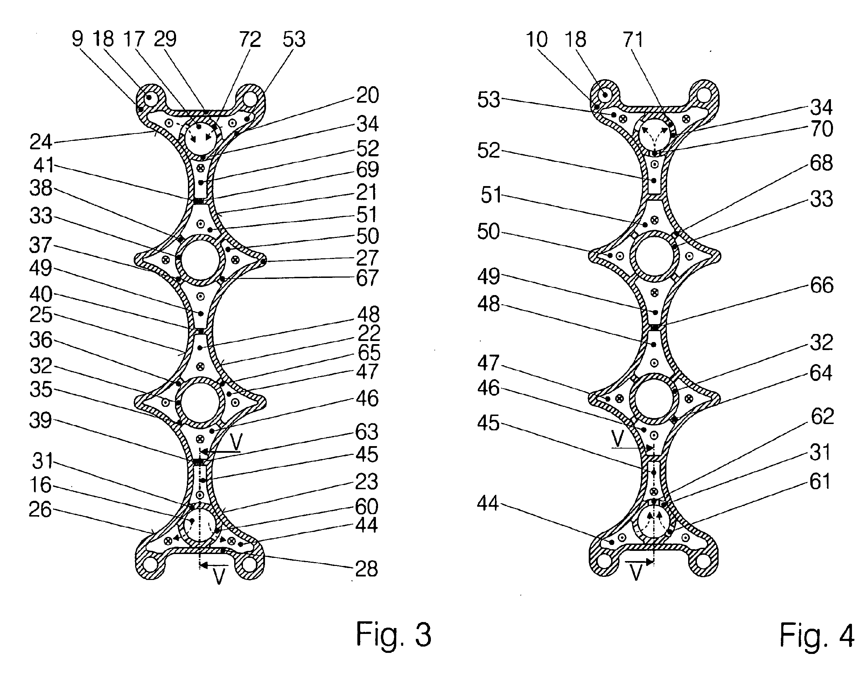

Fig. 2 zeigt dieselbe Batterie mit abgenommenen vorderer Deckkappe 11, sodass sich die Stirnfläche 9 des Strangpressprofils und damit sein Querschnitt dem Betrachter darbietet. Es ist vergrößert und ohne die Zellen in Fig. 3 zu sehen.

In Fig. 3 ist die vordere Stirnfläche 9 und Fig. 4 die hintere Stirnfläche 10 des Strangpressprofils alleine dargestellt. Die insgesamt mit 20 bezeichnete Außenwand des Strangpressprofils bildet kreisbogenförmige Ausnehmungen 21 bis 26 für die Zellen 1 bis 6, die so paarweise Rücken an Rücken und nebeneinander angeordnet sind. Weiters bildet die Au-βenwand 20 eine untere (28) und eine obere (29) Querwand. Am Übergang von den Ausnehmungen zu den Querwänden 28, 29 sind Bohrungen 18 für weitere erste Zugelemente angebracht.

Innerhalb dieser Aussenwand 20 ist durch verschiedene Wände eine Anzahl von in Längsrichtung verlaufenden Kanälen (44-53) ausgebildet. So ist zwischen der unteren Querwand 28 und den die Ausnehmungen 23, 26 bildenden Teilen ein erster rohrförmiger Profilteil 31, welcher die drei äußeren Wandteile berührt, gewissermaßen einen eingeschriebenen Kreis bildet. Ein ebensolcher erster rohrförmiger Profilteil ist zwischen der oberen Querwand 29 und den die Ausnehmungen 21, 24 bildenden Teile der Außenwand 20 angeordnet.

Zwischen den hier die Ausnehmungen 21, 22, 25 und 24 bildenden Wandteilen ist an der breitesten Stelle an der Höhe der Grate 27, ein zweiter rohrförmiger Profilteil 33 ausgebildet. Von ihm gehen sternförmig Zwischenwände 37, 38 zu den die Ausnehmungen bildenden äußeren Wandteilen aus. In gleicher Weise ist zwischen den Ausnehmungen 22, 23, 25, 26 ein zweiter rohrförmiger Profilteil 32 mit den Zwischenwänden 35, 36 ausgebildet. Ungefähr an den schmalsten Stellen des Strangpressprofils sind Trennwände 39, 40, 41.

Diese Zwischenwände 35-38 und Trennwände 39-41 bilden voneinander getrennte Strömungskanäle, in denen nach einer beispielhaften Ausführungsform die Strömungsrichtung zwischen benachbarten Strömungskanälen abwechselt. Die Strömungsrichtungen sind in Fig.3 in der üblichen Weise angedeutet: Ein Kreis mit Punkt steht für einen auf das Auge des Betrachters gerichteten Pfeil, ein Kreis mit Kreuz einen sich vom Betrachter entfernenden Pfeil. In Fig.4, die die hintere Stirnfläche 10 zeigt, sind die Symbole für die Flussrichtung für ein und denselben Kanal denen der Fig.3 entgegengesetzt.

Auf diese Weise sind folgende Kanäle gebildet: Zwei zur hinteren Stirnfläche 10 hin durchströmte symmetrische erste Kanäle 44; ein zur vorderen Stirnfläche 9 durchströmter zweiter Kanal 45; ein zur hinteren Stirnfläche 10 durchströmter dritter Kanal 46; zwei zur vorderen Stirnfläche 9 durchströmte symmetrische vierte Kanäle 47; ein zur hinteren Stirnfläche 10 durchströmter fünfter Kanal 48; ein zur vorderen Stirnfläche 9 durchströmter sechster Kanal 49; zwei zur hinteren Stirnfläche 10 durchströmte symmetrische siebente Kanäle 50; ein zur vorderen Stirnfläche 9 durchströmter achter Kanal 51; ein zur hinteren Stirnfläche 10 durchströmter neunter Kanal 52; und zwei zur vorderen Stirnfläche 9 durchströmt symmetrische zehnte Kanäle 53.

Zur Umleitung der Strömung an den Stirnflächen könnten entsprechende Umleitungskanäle an der Innenseite der Deckkappen 11,12 eingefräst sein. Erfindungsgemäß aber werden sie durch von den Stirnflächen 9, 10 ausgehende Ausklinkungen der Zwischenwände und Trennwände des Strangpressprofils 8 hergestellt. Da alle diese Ausklinkungen von einer der beiden Stirnflächen 9, 10 ausgehen, sind sie mit geringem Fertigungsaufwand anzubringen, etwa durch Fräsen.

In Fig. 3 sind die von der vorderen Stirnfläche 9 ausgehenden Ausklinkungen mit den folgenden Bezugszeichen versehen: 60 im rohrförmigen Profilteil 31 zur Verbindung des Zuflusses 16 mit den ersten Kanälen 44; 63 in der Trennwand 39 zur Verbindung des zweiten Kanals 45 mit dem dritten Kanal 46; 65 in den Zwischenwänden 35 zur Verbindung der beiden vierten Kanäle 47 mit dem fünften Kanal 48; 67 in den Zwischenwänden 37 zur Verbindung des sechsten Kanals 49 mit den beiden siebenten Kanälen 50; 69 in der Trennwand 41 zur Verbindung des achten Kanals 51 mit dem neunten Kanal 52; 72 zur Verbindung der beiden zehnten Kanäle 53 mit dem Abfluss 17. Anstelle der Ausklinkungen 60,62, 70,71 können die rohrförmigen Wandteile 31,34 in Längsrichtung zurückgenommen sein.

Fig. 4 zeigt die Ausklinkungen in der hinteren Stirnfläche 10: 61 und 62 zur Verbindung der beiden ersten Kanäle 44 mit dem zweiten Kanal 45; 64 in den Zwischenwänden 35 zur Verbindung des dritten Kanals mit den beiden vierten Kanälen 47; 66 in der Trennwand 40 zur Verbindung des fünften Kanals 48 mit dem sechsten Kanal 49; 68 in den Zwischenwänden 38 zur Verbindung der siebten Kanäle 50 mit dem achten Kanal 51; 70 und 71 im rohrförmigen Profilteil 34 zur Verbindung des neunten Kanals 52 mit den beiden zehnten Kanälen 53.

Mit den Ausklinkungen in den ersten rohrförmigen Profilteilen 31, 34 ergibt sich eine Besonderheit, die anhand der Fig.5 zu erklären ist.

In Fig . 5 ist zu sehen, dass der erste rohrförmige Profilteil 31, der mit dem Zufluss 16 des Kühlmittels in Verbindung steht, in der Nähe des vorderen Deckels 11 und in der Nähe der hinteren Deckkappe 12 je einen Pfropfen 75, 76 enthält. Diese Pfropfen 45, 46 trennen einen Eintrittsraum 78 auf der einen Seite und einen Durchgangsraum 79 auf der anderen Seite von einem zwischen den beiden Pfropfen 75, 76 liegenden nichtdurchströmten abgeschlossenen Raum 77. So strömt die durch den Zufluss 16 eintretende Kühlflüssigkeit in den Eintrittsraum 78, von diesem durch die Ausklinkungen 60 (siehe Fig. 3) in die beiden ersten Kanäle 44, die sich in Fig.5 vor und hinter der Bildfläche, in Fig.3 beiderseits des ersten rohrförmigen Profilteiles befinden. Am anderen Ende der ersten Kanäle 44 tritt das Kühlmedium durch die Ausklinkungen 61 in den Durchgangsraum 79 und von diesem über die Ausklinkung 62 in den zweiten Kanal 45. An der vorderen Stirnfläche 9 strömt das Kühlmedium dann durch die Ausklinkung 63 in den dritten Kanal 46, und so weiter.

Analog, nur in entgegengesetzter Richtung ist die Strömung im ersten rohrförmigen Profilteil 34 zum Abfluss 17 geführt.

Soweit ein Ausführungsbeispiel. Von diesem abweichend können im Rahmen der Erfindung die Zellen auch in mehr als zwei Reihen und/oder gegeneinander versetzt angeordnet und die Trägerplatte entsprechend anders geformt sein. Auch dann kann bei geeigneter Anordnung der inneren Wände erreicht werden, dass die Strömungsrichtungen in benachbarten Kanälen einander entgegengesetzt ist. Dadurch wird bei einfachster und billigster Herstellung eine gleichmäßige Temperaturverteilung an der Oberfläche der Trägerplatte erreicht werden.

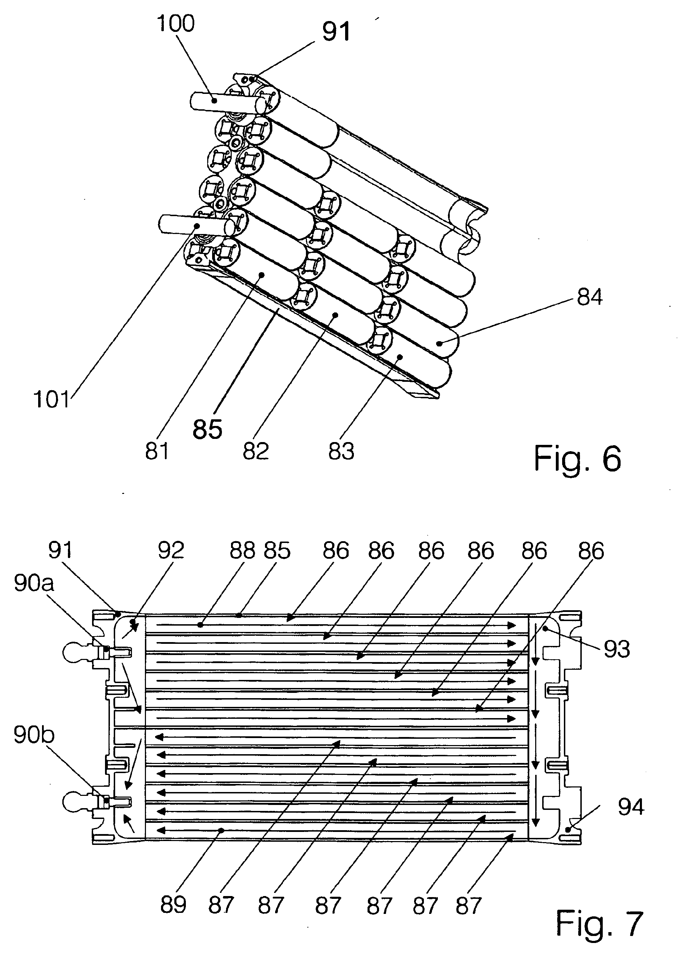

Fig. 6 zeigt eine weitere mögliche Ausführungsform einer erfindungsgemäßen modularen Batterieeinheit 80. Dabei sind mehrere Batteriezellen 81, 82, 83, 84 an einem Kühlkörper 85 angeordnet. Die Batteriezellen sind dabei an den Kühlkörper 85 angeklebt oder angepresst oder auf andere Weise mit diesem in Kontakt gebracht, so dass von den Batteriezellen im Betrieb entwickelte Wärme auf den Kühlkörper 85 übertragen werden kann. Wie aus Fig. 6 ersichtlich, können mehrere Batteriezellen 81, 82, 83 hintereinander entlang der Längsseite des Kühlkörpers 85 an diesem angeordnet werden. Das ist insbesondere in dem Fall vorteilhaft, in welchem der Kühlkörper beispielsweise aus einem Strangpressprofil geformt ist und seiner Länge dem verfügbaren Bauraum angepasst werden kann. Das Strangpressprofil kann damit in der nötigen Länge zugeschnitten werden. Nachdem Batteriezellen zumeist nur in Standardgrößen verfügbar sind, werden so mehrere kürzere Batteriezellen hintereinander angeordnet um die volle Länge des Kühlkörpers bzw. den verfügbaren Bauraum bestmöglich zu nutzen.

In Fig. 7 ist ein vertikaler Längsschnitt durch den Kühlkörper 85 entlang einer Mittenebene dargestellt. Darin sind die in dem Kühlkörper 85 ausgebildeten Kanäle 86, 87 ersichtlich.

Weiter sind in der schematischen Darstellung in Fig. 7 durch entsprechende Pfeile 88, 89 in den Kanälen 86,87 die Flußrichtungen des Kühlmedium angezeigt. Es ist dabei ersichtlich, dass in einem ersten, oberen Bereich das über einen Zulauf 90a in die Deckkappe 91 zugeführte Kühlmedium sich in einem abgeteilten Verteilerraum 92 in der Deckkappe 91 verteilt, bevor es über die Kanäle 86,87 des Kühlkörpers 85 auf die gegenüberliegende Seite des Kühlkörpers 85 in einen abgegrenzten Verteilerraum 93 der zweiten Deckkappe 94 geleitet wird. Von diesem Verteilerraum 93 wird das Kühlmedium nachfolgend wiederum auf die gegenüberliegende Seite in einen Sammelraum bzw. Verteilerraum 94 der ersten Deckkappe 91 geleitet. Von diesem Sammelraum 94 wird das Kühlmedium über einen in bzw. an der Deckkappe 91 angeordneten Ablauf 90b aus der Batterieeinheit abgeleitet. Somit weist der Kühlkörper eine vertikale Zweiteilung auf, wodurch in einem ersten, oberen Bereich ein Kühlmedium von einer ersten zu einer zweiten Seite strömt und in einem zweiten, unteren Bereich Kühlmedium von der zweiten zur ersten Seite zurückströmt.

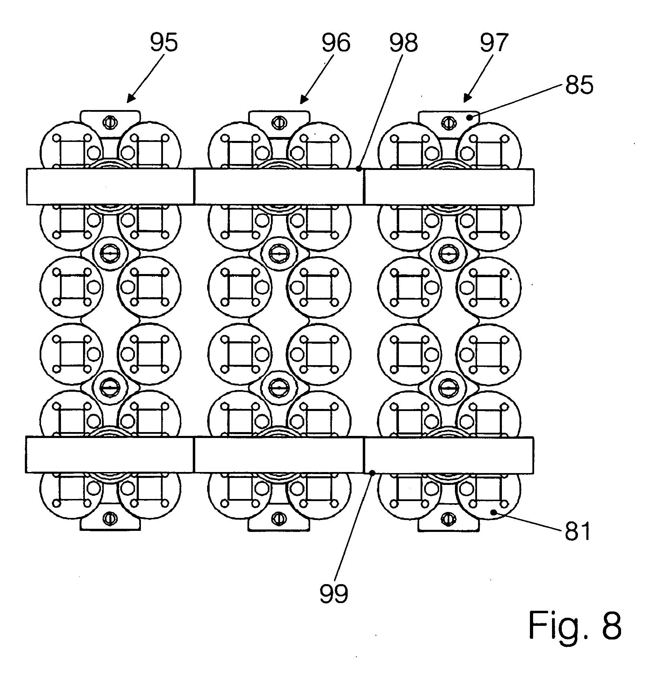

In Fig. 8 sind mehrere modulare Batterieeinheiten 95, 96, 97 zu einem Batteriesystem kombiniert. Zu diesem Zweck werden die Zu- und Abläufe 98 durch geeignete Verteilerleisten 98, 99, die vorzugsweise integrierte Dichtungen, beispielsweise O-Ringe, aufweisen, miteinander verbunden. Wie aus Fig. 8 ersichtlich ist dabei eine obere Verteilerleiste 98 zur Verbindung der Zuläufe sowie eine untere Verteilerleiste 99 zur Verbindung der Abläufe vrogesehen. In einer anderen Ausführungsform können die Positionen der Zu- und Abläufe natürlich vertauscht werden. Vorzugsweise weist bereits jede Batterieeinheit Teile der Verteilerleisten 98, 99 auf, und ist deshalb, wie in Fig. 6 schematisch dargestellt, an seiner Deckkappe 85 mit einem ersten und einem zweiten Verteilerleistenelement 100, 101 ausgestattet, wodurch die Verteilerleisten im Wesentlichen durch Zusammenstecken der Verteilerleistenelemente der Batterieeinheiten gebildet werden können.

Ein besonderer Vorteil der erfindungsgemäßen Ausführung der modularen Batterieeinheit ist deren einfache Anpassung an den verfügbaren Bauraum. Nachdem der Kühlkörper im Allgemeinen aus einem Strangpressprofil hergestellt ist, kann dieser in nahezu beliebiger Länge zugeschnitten bzw. eingepasst werden. Je nach Bauraum können demnach beliebig lange Batterieeinheiten 102, 103 hergestellt werden, wie in Fig. 9 vereinfacht dargestellt ist. Je nach Länge des Kühlkörpers werden geeignete Batteriezellen verwendet bzw. mehrere Batteriezellen hintereinander angeordnet um möglichst die volle Länge des Kühlkörpers zu nutzen. Dazu ist in Fig. 9 im oberen Bereich eine erste Ausführung einer Batterieeinheit dargstellt, bei welcher 3 Reihen von Batteriezellen hintereinander am Kühlkörper angeordnet sind, während im unteren Bereich in einer zweiten Ausführung 4 Reihen von vertikal angeordneten Batteriezellen hintereinander am Kühlkörper angeordnet sind. Wie ersichtlich unterscheiden sich die beiden Ausführungsformen zwar in Ihrer Länge und in der Länge Ihrer Kühlkörper, jedoch ist der Kühlkörper im Profil ident, insbesondere aus einem einzigen Strangpressprofil hergestellt. Auch die verwendeten Batteriezellen unterscheiden sich in beiden Ausführungsformen nicht.

Nach einer weiteren bevorzugten Ausführungsform der Erfindung werden die Batterieeinheiten hintereinander angeordnet, und gegebenenfalls einerseits mit Ihren Zuläufen und andererseits mit Ihren Abläufen verbunden. Auf diese Weise können große Batteriesysteme mit entsprechend großer Leistung verwirklicht werden.

Eine weitere mögliche Ausgestaltung eines Kühlkörpers 104 ist in Fig. 10 schematisch darstellt. Ähnlich wie in Fig.7 ist hier ebenenfalls ein vertikaler Längsschnitt einer möglichen Ausführungsform eines Kühlkörpers dargestellt. Diese Ausführung unterscheidet sich von den anderen gezeigten Ausführungsbeispielen dadurch, dass der Zulauf 105 in bzw. an einer ersten Deckkappe 106 und der Ablauf 107 in bzw. an der gegenüberliegenden zweiten Deckkappe 108 angeordnet ist. Wie weiter aus Fig. 10 ersichtlich ist, wird das Kühlmedium, wie durch Pfeile 109 zur Kennzeichnung der Flußrichtung des Kühlmediums verdeutlicht, in im Wesentlichen parallelen Kanälen 110 in gleicher Richtung durch den Kühlkörper 104 geführt. In den Deckkappen 106, 108 befinden sich sogenannte Verteiler- bzw. Sammelräume 111, 112 um einerseits das Kühlmedium von dem Zulauf 105 zu den einzelnen Kanälen 110 zu verteilen bzw. auf der gegenüberliegenden Seite von den Kanälen 110 zum Ablauf 107 hin zu sammeln.

## Patentansprüche

1. Modulare Batterieeinheit mit zumindest zwei Batteriezellen (1, 2, 3, 4, 5, 6) sowie einem zwischen den Batteriezellen angeordneten und sich in Richtung der größten Ausdehnung der Batteriezellen an die Batteriezellen anschmiegenden Kühlkörper (8), der von einem Kühlmedium durchströmt wird und einerseits in den Batteriezellen entstandene Wärme abtransportiert und andererseits die Batteriezellen abstützt, und mit zwei an dem Kühlkörper angeordneten Deckkappen (11, 12), wobei eine erste der zwei Deckkappen zum Verschließen der ersten Stirnfläche des Kühlkörpers und eine zweite der zwei Deckkappen zum Verschließen der zweiten Stirnfläche des Kühlkörpers und ein Zulauf (16) und ein Ablauf (17) für das Kühlmedium vorgesehen sind, wobei der Zulauf des Kühlmediums an der ersten und/oder zweiten Deckkappe und der Ablauf des Kühlmediums an der ersten und/oder zweiten Deckkappe angeordnet ist, **dadurch gekennzeichnet, dass** der Kühlkörper (8) ein Profil mit auf gegenüberliegenden Seiten angeordneten offenen kreisbogenförmigen Ausnehmungen (21, 22, 23, 24, 25, 26) zur Aufnahme der Batteriezellen (1, 2, 3, 4, 5, 6) aufweist und der Kühlkörper zwischen der ersten und der zweiten Deckkappe (11, 12) verlaufende getrennte Kanäle (44-53) zur Kühlung der Batteriezellen aufweist und der Kühlkörper (8) ein tragendes Strangpressteil ist und die Kanäle (44-53) in seinem Inneren durch entsprechende Wände des Strangpressprofiles gebildet werden.

2. Modulare Batterieeinheit nach Anspruch 1, **dadurch gekennzeichnet, dass** der Zulauf (16) des Kühlmediums an der ersten Deckkappe (11) und der Ablauf (17) des Kühlmediums an der zweiten Deckkappe (12) angeordnet ist.

3. Modulare Batterieeinheit nach Anspruch 1, **dadurch gekennzeichnet, dass** sowohl der Ablauf (17) als auch der Zulauf (16) des Kühlmediums an der ersten Deckkappe (11) angeordnet ist.

4. Modulare Batterieeinheit nach Anspruch 1, **dadurch gekennzeichnet, dass** das Kühlmedium benachbarte Kanäle (44-53) in entgegen gesetzten Richtungen durchströmt.

5. Modulare Batterieeinheit nach Anspruch 1, **dadurch gekennzeichnet, dass** das Kühlmedium benachbarte Kanäle (44-53) in gleicher Richtung strömt.

6. Modulare Batterieeinheit nach Anspruch 1, **dadurch gekennzeichnet, dass** der Kühlkörper zwei getrennte Bereiche aufweist, und das Kühlmedium in einem ersten Bereich des Kühlkörpers in benachbarten Kanälen (44-53) in einer ersten Richtung strömt und in einem zweiten Bereich in benachbarten Kanälen (44-53) in einer zweiten, der ersten Richtung entgegen gesetzten, Richtung strömt.

7. Modulare Batterieeinheit nach einem der vorhergehenden Ansprüche, **dadurch gekennzeichnet, dass** in Richtung der größten Ausdehnung des Kühlkörpers (8) mehrere Batteriezellen hintereinander angeordnet sind.

8. Modulare Batterieeinheit nach einem der vorhergehenden Ansprüche, **dadurch gekennzeichnet, dass** zumindest eine der Deckkappen, insbesondere beide Deckkappen als Druckgußteile ausgebildet sind und an dem Kühlkörper (8) befestigt, insbesondere mit dem Kühlkörper (8) verschweisst, sind.

9. Modulare Batterieeinheit nach einem der vohergehenden Ansprüche, **dadurch gekennzeichnet, dass** die Verbindung zwischen zwei benachbarten Kanälen (44-53) durch abwechselnd von den beiden Stirnflächen des Kühlkörpers (8) ausgehende Ausklinkungen der Wände hergestellt ist.

10. Modulare Batterieeinheit nach einem der vohergehenden Ansprüche, **dadurch gekennzeichnet, dass** zur Verbindung zwischen zwei benachbarten Kanälen (44-53)des Kühlkörpers (8) die, insbesondere rohrförmigen, Wände des Strangpressprofiles, vorzugsweise in Richtung der größten Ausdehnung des Kühlkörpers (8), zurückgenommen sind.

11. Modulare Batterieeinheit nach einem der vohergehenden Ansprüche, **dadurch gekennzeichnet, dass** zwischen je vier Ausnehmungen ein erster ein Rohr bildender Profilteil (31) vorgesehen ist, von dem Zwischenwände sternförmig ausgehen.

12. Modulare Batterieeinheit nach Anspruch 11, **dadurch gekennzeichnet, dass** die Deckkappen (11, 12) mit dem ein Rohr bildenden Profilteil deckungsgleich je ein Loch haben, sodass die beiden Deckkappen (11, 12) mittels erster Zugelemente (13) miteinander verbunden sind.

13. Modulare Batterieeinheit nach einem der vohergehenden Ansprüche, wobei zwischen den obersten und untersten zwei auf gegenüberliegenden Seiten angeordneten Ausnehmungen ein zweiter ein Rohr bildender Profilteil (32,33) vorgesehen ist, welcher drei Zwischenwände bildet.

14. Modulare Batterieeinheit nach Anspruch 13, **dadurch gekennzeichnet, dass** die zweiten ein Rohr bildenden Profilteile (32, 33) einerseits mit dem Zulauf beziehungsweise Ablauf des Kühlmittels strömungsverbunden sind.

15. Modulare Batterieeinheit nach einem der vorhergehenden Ansprüche, **dadurch gekennzeichnet, dass** eine Umfassung der Batteriezellen (1, 2, 3, 4, 5, 6) sowie des Kühlkörpers (8) vorgesehen ist und die Umfassung von den äußeren Zugelementen (14) gebildet ist, die die Batteriezellen an ihrer dem Kühlkörper abgewandten Au-βenseite umschlingen, wobei der Raum zwischen den äußeren Zugelementen und den nicht an dem Kühlkörper anliegenden Teilen der Zellen von einem dreikantigen Längsprofil (15) ausgefüllt ist.

16. Modulare Batterieeinheit nach Anspruch 15, **dadurch gekennzeichnet, dass** das dreikantige Längsprofil (15) hohl ist.

17. Batteriesystem mit mehreren modularen Batterieeinheiten nach einem der Ansprüche 1 bis 16, wobei die modularen Batterieeinheiten in einem Gehäuse benachbart angeordnet sind und einerseits die Zuläufe (98, 99)der Batterieeinheiten mit einander verbunden sind, und andererseits die Abläufe (98,99) der Batterieeinheiten mit einander verbunden sind.

18. Batteriesystem nach Anspruch 17, **dadurch gekennzeichnet, dass** die Batterieeinheiten seitlich hintereinander am Kühlkörper (8) angeordnet sind.

19. Verfahren zur Anpassung eines Batteriesystems an einen Bauraum, vorzugsweise eines Fahrzeuges, wobei das Batteriesystem aus zumindest einer modularen Batterieeinheit nach einem der Ansprüche 1 bis 16 gebildet wird und der Kühlkörper (8) der modularen Batterieeinheit eine vorgegebene Breite und Höhe sowie eine variable Länge aufweist, wobei die Länge des Kühlkörpers (8) entsprechend einer in dem Bauraum verfügbaren Bauraumlänge gewählt wird.

20. Verfahren nach Anspruch 19, **dadurch gekennzeichnet, dass** der Kühlkörper (8) der modularen Batterieeinheit aus einem Strangpressprofil auf die gewählte Länge zu geschnitten und/oder angepasst wird.

## Claims

1. Modular battery unit having at least two battery cells (1, 2, 3, 4, 5, 6) as well as a cooling element (8) which is arranged between the battery cells and fits closely against the battery cells in the direction of the largest extent of the battery cells and through which a cooling medium flows, which cooling element, on the one hand, transports away heat produced in the battery cells and, on the other hand, supports the battery cells, and having two cover caps (11, 12) which are arranged on the cooling element, wherein a first of the two cover caps is provided for closing off the first end face of the cooling element, and a second of the two cover caps is provided for closing off the second end face of the cooling element, and an inflow (16) and an outflow (17) for the cooling medium are provided, wherein the inflow of the cooling medium is arranged on the first and/or second cover cap, and the outflow of the cooling medium is arranged on the first and/or second cover cap, **characterized in that** the cooling element (8) has a profile with open, circular-arc-shaped recesses (21, 22, 23, 24, 25, 26) which are arranged on opposite sides and have the purpose of accommodating the battery cells (1, 2, 3, 4, 5, 6), and the cooling element has separate ducts (44-53) which run between the first and second cover caps (11, 12) and have the purpose of cooling the battery cells, and the cooling element (8) is a load-bearing extruded component and the ducts (44-53) are formed in its interior by corresponding walls of the extruded profile.

2. Modular battery unit according to Claim 1, **characterized in that** the inflow (16) of the cooling medium is arranged on the first cover cap (11), and the outflow (17) of the cooling medium is arranged on the second cover cap (12).

3. Modular battery unit according to Claim 1, **characterized in that** both the outflow (17) and the inflow (16) of the cooling medium are arranged on the first cover cap (11).

4. Modular battery unit according to Claim 1, **characterized in that** the cooling medium flows through adjacent ducts (44-53) in opposite directions.

5. Modular battery unit according to Claim 1, **characterized in that** the cooling medium flows through adjacent ducts (44-53) in the same direction.

6. Modular battery unit according to Claim 1, **characterized in that** the cooling element has two separate regions, and in a first region of the cooling element the cooling medium flows in a first direction in adjacent ducts (44-53), and in a second region the cooling medium flows in a second direction, opposed to the first direction, in adjacent ducts (44-53).

7. Modular battery unit according to one of the preceding claims, **characterized in that** a plurality of battery cells are arranged one behind the other in the direction of the largest extent of the cooling element (8).

8. Modular battery unit according to one of the preceding claims, **characterized in that** at least one of the cover caps, in particular both cover caps, are embodied as pressure cast parts and are attached to the cooling element (8), in particular welded to the cooling element (8).

9. Modular battery unit according to one of the preceding claims, **characterized in that** the connection between two adjacent ducts (44-53) is produced by alternate notching of the walls starting from the two end faces of the cooling element (8).

10. Modular battery unit according to one of the preceding claims, **characterized in that**, in order to form a connection between two adjacent ducts (44-53) of the cooling element (8), the, in particular, tubular walls of the extruded profile are set back, preferably in the direction of the largest extent of the cooling element (8).

11. Modular battery unit according to one of the preceding claims, **characterized in that** a first profile part (31) which forms a tube and from which intermediate walls extend in a star shape, is provided between every four recesses.

12. Modular battery unit according to Claim 11, **characterized in that** the cover caps (11, 12) each have a hole congruently with the profile part forming a tube, with the result that the two cover caps (11, 12) are connected to one another by means of first tensile elements (13).

13. Modular battery unit according to one of the preceding claims, wherein a second profile part (32, 33) which forms a tube and three intermediate walls is provided between the uppermost and bottommost two recesses arranged on opposite sides.

14. Modular battery unit according to Claim 13, **characterized in that** the second profile parts (32, 33) which form a tube have a flow connection on one side to the inflow or outflow of the coolant.

15. Modular battery unit according to one of the preceding claims, **characterized in that** an enclosure of the battery cells (1, 2, 3, 4, 5, 6) and of the cooling element (8) is provided, and the enclosure is formed by the outer tensile elements (14) which wrap around the battery cells on the outer side thereof facing away from the cooling element, wherein the space between the outer tensile elements and the parts of the cells which do not butt against the cooling element is filled in by a three-edge longitudinal profile (15).

16. Modular battery unit according to Claim 15, **characterized in that** the three-edged longitudinal profile (15) is hollow.

17. Battery system having a plurality of modular battery units according to one of Claims 1 to 16, wherein the modular battery units are arranged adjacently in a housing and, on the one hand, the inflows (98, 99) of the battery units are connected to one another and, on the other hand, the outflows (98, 99) of the battery units are connected to one another.

18. Battery system according to Claim 17, **characterized in that** the battery units are arranged laterally one behind the other on the cooling element (8).

19. Method for adapting a battery system to an installation space, preferably of a vehicle wherein the battery system is formed from at least one modular battery unit according to one of Claims 1 to 16, and the cooling element (8) of the modular battery unit has a predefined width and height as well as a variable length, wherein the length of the cooling element (8) is selected to correspond to an installation space length which is available in the installation space.

20. Method according to Claim 19, **characterized in that** the cooling element (8) of the modular battery unit is cut and/or adapted to the selected length from an extruded profile.

## Revendications

1. Unité de batterie modulaire comprenant au moins deux cellules de batterie (1, 2, 3, 4, 5, 6) ainsi qu'un corps de refroidissement (8) disposé entre les cellules de batterie et épousant la forme des cellules de batterie dans la direction de la plus grande étendue des cellules de batterie, lequel corps de refroidissement est parcouru par un fluide de refroidissement et d'une part évacue la chaleur créée dans les cellules de batterie et d'autre part supporte les cellules de batterie, et comprenant deux chapeaux de recouvrement (11, 12) disposés sur le corps de refroidissement, un premier des deux chapeaux de recouvrement étant prévu pour fermer la première surface frontale du corps de refroidissement et un deuxième des deux chapeaux de recouvrement étant prévu pour fermer la deuxième surface frontale du corps de refroidissement et une alimentation (16) et une évacuation (17) pour le fluide de refroidissement étant prévues, l'alimentation en fluide de refroidissement étant disposée au niveau du premier et/ou du deuxième chapeau de recouvrement et l'évacuation du fluide de refroidissement étant disposée au niveau du premier et/ou du deuxième chapeau de refroidissement, **caractérisée en ce que** le corps de refroidissement (8) présente un profil avec des évidements (21, 22, 23, 24, 25, 26) en forme d'arcs de cercle ouverts disposés sur des côtés opposés pour recevoir les cellules de batterie (1, 2, 3, 4, 5, 6) et le corps de refroidissement présente des canaux séparés (44-53) s'étendant entre le premier et le deuxième chapeau de recouvrement (11, 12), pour refroidir les cellules de batterie, et le corps de refroidissement (8) est une pièce filée porteuse et les canaux (44-53) sont formés à l'intérieur de celle-ci par des parois correspondantes du profilé filé.

2. Unité de batterie modulaire selon la revendication 1, **caractérisée en ce que** l'alimentation (16) en fluide de refroidissement est disposée au niveau du premier chapeau de recouvrement (11) et l'évacuation (17) du fluide de refroidissement est disposée au niveau du deuxième chapeau de recouvrement (12).

3. Unité de batterie modulaire selon la revendication 1, **caractérisée en ce que** l'évacuation (17) ainsi que l'alimentation (16) pour le fluide de refroidissement sont disposées sur le premier chapeau de recouvrement (11).

4. Unité de batterie modulaire selon la revendication 1, **caractérisée en ce que** le fluide de refroidissement parcourt des canaux adjacents (44-53) dans des directions opposées.

5. Unité de batterie modulaire selon la revendication 1, **caractérisée en ce que** le fluide de refroidissement s'écoule à travers des canaux adjacents (44-53) dans la même direction.

6. Unité de batterie modulaire selon la revendication 1, **caractérisée en ce que** le corps de refroidissement présente deux régions séparées et le fluide de refroidissement s'écoule dans une première région du corps de refroidissement dans des canaux adjacents (44-53) dans une première direction et dans une deuxième région dans des canaux adjacents (44-53) dans une deuxième direction opposée à la première direction.

7. Unité de batterie modulaire selon l'une quelconque des revendications précédentes, **caractérisée en ce que** dans la direction de la plus grande étendue du corps de refroidissement (8) sont disposées, les unes derrière les autres, plusieurs cellules de batterie.

8. Unité de batterie modulaire selon l'une quelconque des revendications précédentes, **caractérisée en ce qu'**au moins l'un des chapeaux de recouvrement, notamment les deux chapeaux de recouvrement, sont réalisés sous forme de pièces coulées sous pression et sont fixés sur le corps de refroidissement (8), en particulier sont soudés au corps de refroidissement (8).

9. Unité de batterie modulaire selon l'une quelconque des revendications précédentes, **caractérisée en ce que** la liaison entre deux canaux adjacents (44-53) est établie par des encoches des parois partant en alternance des deux faces frontales du corps de refroidissement (8).

10. Unité de batterie modulaire selon l'une quelconque des revendications précédentes, **caractérisée en ce que** pour la liaison entre deux canaux adjacents (44-53) du corps de refroidissement (8), les parois notamment tubulaires du profilé filé sont de préférence en retrait dans la direction de la plus grande étendue du corps de refroidissement (8).

11. Unité de batterie modulaire selon l'une quelconque des revendications précédentes, **caractérisée en ce qu'**entre quatre évidements respectifs est prévue une première partie profilée (31) formant un tube, de laquelle partent des parois intermédiaires en forme d'étoile.

12. Unité de batterie modulaire selon la revendication 11, **caractérisée en ce que** les chapeaux de recouvrement (11, 12) présentent avec la partie profilée formant un tube un trou respectif en coïncidence, de telle sorte que les deux chapeaux de recouvrement (11, 12) soient connectés l'un à l'autre au moyen de premiers éléments de traction (13).

13. Unité de batterie modulaire selon l'une quelconque des revendications précédentes, dans laquelle, entre les deux évidements le plus en haut et le plus en bas disposés sur des côtés opposés est prévue une deuxième partie profilée (32, 33) formant un tube, qui forme trois parois intermédiaires.

14. Unité de batterie modulaire selon la revendication 13, **caractérisée en ce que** les deuxièmes parties profilées (32, 33) formant un tube sont connectés fluidiquement d'une part à l'alimentation, respectivement à l'évacuation du fluide de refroidissement.

15. Unité de batterie modulaire selon l'une quelconque des revendications précédentes, **caractérisée en ce qu'**il est prévu un encadrement des cellules de batterie (1, 2, 3, 4, 5, 6) ainsi que du corps de refroidissement (8) et l'encadrement est formé par les éléments de traction extérieurs (14), qui entourent les cellules de batterie sur leur côté extérieur opposé au corps de refroidissement, l'espace entre les éléments de traction extérieurs et les parties des cellules ne s'appliquant pas contre le corps de refroidissement étant rempli par un profilé longitudinal à trois arêtes (15).

16. Unité de batterie modulaire selon la revendication 15, **caractérisée en ce que** le profilé longitudinal à trois arêtes (15) est creux.

17. Système de batterie comprenant plusieurs unités de batterie modulaires selon l'une quelconque des revendications 1 à 16, dans lequel les unités de batterie modulaires sont disposées les unes à côté des autres dans un boîtier et d'une part les alimentations (98, 99) des unités de batterie sont connectées les unes aux autres, et d'autre part les évacuations (98, 99) des unités de batterie sont connectées les unes aux autres.

18. Système de batterie selon la revendication 17, **caractérisé en ce que** les unités de batterie sont disposées latéralement les unes derrière les autres sur le corps de refroidissement (8).

19. Procédé pour l'adaptation d'un système de batterie à un espace de construction, de préférence d'un véhicule, dans lequel le système de batterie est formé d'au moins une unité de batterie modulaire selon l'une quelconque des revendications 1 à 16 et le corps de refroidissement (8) de l'unité de batterie modulaire présente une largeur et une hauteur prédéfinies ainsi qu'une longueur variable, la longueur du corps de refroidissement (8) étant sélectionnée en fonction d'une longueur d'espace de construction disponible dans l'espace de construction.

20. Procédé selon la revendication 19, **caractérisé en ce que** le corps de refroidissement (8) de l'unité de batterie modulaire constitué d'un profilé filé est découpé et/ou adapté à la longueur sélectionnée.
